(19) Europäisches Patentamt

European Patent Office

Office européen des brevets

(11) **EP 1 032 110 A1**

(12) **DEMANDE DE BREVET EUROPEEN**

(43) Date de publication:
 **30.08.2000 Bulletin 2000/35**

(51) Int. Cl.⁷: **H02J 7/16**

(21) Numéro de dépôt: **00104083.1**

(22) Date de dépôt: **28.02.2000**

(84) Etats contractants désignés:
 **AT BE CH CY DE DK ES FI FR GB GR IE IT LI LU MC NL PT SE**
 Etats d'extension désignés:
 **AL LT LV MK RO SI**

(30) Priorité: **26.02.1999 FR 9902540**

(71) Demandeur:
 **VALEO EQUIPEMENTS ELECTRIQUES MOTEUR
 94017 Creteil Cedex (FR)**

(72) Inventeurs:
 • **Pierret, Jean-Marie
  75012 Paris (FR)**
 • **Brandy, Frédéric
  94270 Le Kremlin Bicetre (FR)**

(74) Mandataire: **Leteinturier, Pascal
  Valeo Equipements Electroniques Moteur,
  Propriété Industrielle
  2, rue André Boulle, BP 150, 94017 Creteil (FR)**

(54) **Alternateur équipé de moyens perfectionnés de protection contre le délestage de charge, et dispositif régulateur associé**

(57)  Un alternateur possède un circuit régulateur (REG) comprenant un interrupteur de puissance (Tex) monté en série avec une diode de roue libre (DL1) et alimentant un enroulement d'excitation de l'alternateur, et un circuit de commande (Com) de l'interrupteur pour réguler la tension de sortie (Ualt) de l'alternateur sur une consigne.

Selon l'invention, le circuit régulateur comprend un deuxième interrupteur de puissance (Tdex) monté en série avec l'enroulement d'excitation (Ex) entre le point commun premier transistor/diode d'une part et l'enroulement (Ex) d'autre part et à l'état conducteur pendant le fonctionnement normal, et des moyens (Com) sensibles à l'apparition d'une surtension dans la tension de sortie (Ualt) pour bloquer ledit deuxième interrupteur (Tdex) jusqu'à ce que la tension aux bornes de l'enroulement d'excitation ait atteint une tension inverse de démagnétisation (Vc) donnée.

Application à la protection des composants en cas de surtension due à un délestage de charge.

FIG.1

## Description

La présente invention concerne d'une façon générale les alternateurs de véhicules automobiles, et en particulier un alternateur équipé d'un circuit électronique de régulation de la charge d'une batterie par cet alternateur, pourvu de moyens perfectionnés de protection.

Lorsque le réseau de bord d'un véhicule automobile fonctionne normalement, l'alternateur débite dans les différentes charges électriques en service du véhicule, et assure en même temps la charge de la batterie.

Lorsque survient accidentellement une coupure de la liaison électrique entre l'alternateur et la batterie (phénomène connu sous le vocable anglais "load dump"), le circuit régulateur va tenter de ramener le plus rapidement possible l'excitation de l'alternateur à zéro, mais il subsiste toujours une période de temps plus ou moins longue, typiquement de quelques centaines de millisecondes, pendant laquelle l'alternateur va délivrer sur ses phases une tension excessive. Cette tension excessive est alors transmise au réseau de bord du véhicule via les bornes de puissance de l'alternateur.

Il est donc nécessaire d'adapter l'ensemble des composants et circuits susceptibles d'être exposés à une telle surtension, et notamment le circuit régulateur luimême, pour qu'ils résistent à de tels surtensions, pour ainsi minimiser les dégâts lorsque survient une telle coupure. En outre, pour les alternateurs de très forte puissance, il est également nécessaire de réduire l'énergie d'une telle surtension en réduisant sa durée, car les éléments classiques de protection des composants et circuits électriques ou électroniques du véhicule susceptibles d'être exposés à la surtension de "load dump" ne sont plus suffisants, ou trop coûteux.

On connaît déjà par le document FR-A-2 494 056 un alternateur dont le circuit régulateur possède dus moyens de démagnétisation rapide pour diminuer la durée pendant laquelle une surtension est susceptible d'apparaître dans les circonstances indiquées plus haut.

En particulier, les figures 3 et 4 de ce document illustrent des montages dans lequel un composant semi-conducteur de commutation est associé à l'enroulement d'excitation de l'alternateur pour accélérer la décroissance du courant d'excitation en cas de délestage de charge, et donc diminuer les risques de détérioration précités.

Ces montages souffrent toutefois de certains inconvénients. Ainsi dans les deux exemples antérieurs précités, le composant de commutation T destiné à effectuer la régulation de tension en fonctionnement normal est exposé, en cas de "load dump", à une surtension qui est sensiblement égale à la somme de la surtension proprement-dite en sortie d'alternateur et à la tension inverse qui apparaît aux bornes de l'enroulement d'excitation lorsque le courant dans celui-ci est brusquement coupé. Typiquement, cette surtension peut atteindre 60 à 70 volts dans le cas d'un réseau de bord à 14 volts, ce qui rend un tel composant coûteux et encombrant notamment lorsque l'on souhaite réaliser le régulateur en technologie monolithique.

La présente invention se propose de réaliser un circuit de démagnétisation rapide qui permette de beaucoup moins solliciter des composants de commutation, en termes de surtension à leurs bornes, en cas de délestage de charge, et qui permette donc d'utiliser des composants plus économiques et moins encombrants.

Un autre objet de l'invention est d'atteindre cet objectif tout en restant parfaitement compatible avec le câblage des circuits régulateurs connus, ne disposant que d'une seule borne de sortie vers l'une des bornes de l'enroulement d'excitation (dont l'autre borne est soit à la masse, soit sur la tension positive de sortie d'alternateur).

Ainsi la présente invention propose tout d'abord un alternateur notamment pour véhicule automobile, comprenant un rotor pourvu d'au moins un enroulement d'excitation et un stator pourvu d'au moins un enroulement d'induit, un pont redresseur et un circuit régulateur comprenant un interrupteur de puissance commandé monté en série avec une diode de roue libre entre la tension de sortie de l'alternateur et la masse et alimentant ledit enroulement d'excitation, un circuit de commande de l'interrupteur de puissance de manière à réguler la tension de sortie de l'alternateur sur une valeur de consigne, alternateur caractérisé en ce que le circuit régulateur comprend un deuxième interrupteur de puissance commandé monté en série avec l'enroulement d'excitation entre le point commun entre le premier interrupteur de puissance et la diode de roue libre d'une part, et l'enroulement d'excitation d'autre part, ce deuxième interrupteur de puissance étant à l'état conducteur pendant le fonctionnement normal du dispositif, et des moyens sensibles à l'apparition d'une surtension dans la tension de sortie de l'alternateur pour bloquer ledit deuxième interrupteur de puissance jusqu'à ce que la tension aux bornes de l'enroulement d'excitation ait atteint une tension inverse de démagnétisation donnée.

Selon un deuxième aspect de l'invention, celle-ci propose un dispositif régulateur pour la tension de sortie d'un alternateur notamment dans un véhicule automobile, le dispositif comprenant un interrupteur de puissance commandé apte à être monté en série avec une diode de roue libre entre la tension de sortie de l'alternateur et la masse et à alimenter un enroulement d'excitation de l'alternateur, un circuit de commande de l'interrupteur de puissance de manière à réguler la tension de sortie de l'alternateur sur une valeur de consigne, caractérisé en ce qu'il comprend un deuxième interrupteur de puissance commandé apte à être monté en série avec l'enroulement d'excitation entre le point commun entre le premier interrupteur de puissance et la diode de roue libre d'une part, et l'enroulement d'excitation d'autre part, ce deuxième interrupteur de puissance étant à l'état conducteur pendant le fonctionnement normal du dispositif, et des moyens sensibles à l'apparition d'une surtension dans la tension de sortie de l'alternateur pour bloquer ledit deuxième interrupteur de puissance jusqu'à ce que la tension aux bornes de l'enroulement d'excitation ait atteint une tension inverse de démagnétisation donnée.

Des aspects préférés, mais non limitatifs, de l'alternateur et du dispositif régulateur selon l'invention sont les suivants:

- le deuxième interrupteur de puissance est monté entre la diode de roue libre et une borne de sortie du circuit régulateur connectée à l'enroulement d'excitation.
- le deuxième interrupteur de puissance commandé est un transistor, et la valeur maximale de la tension inverse de démagnétisation est fixée par au moins un composant semi-conducteur à écrêtage monté entre une borne de commande du transistor et l'une de ses bornes d'entrée et de sortie de courant.
- le circuit régulateur possède une borne de sortie unique vers une borne de l'enroulement d'excitation, l'autre borne dudit enroulement étant directement reliée à la tension de sortie de l'alternateur ou à la masse.
- le circuit régulateur est réalisé sur une puce de semi-conducteur unique.
- le premier interrupteur de puissance commandé et la diode de roue libre sont réalisés sur deux puces de semi-conducteur distinctes.
- le second interrupteur de puissance commandé est réalisé sur une puce de semi-conducteur dédiée.
- ladite puce de semi-conducteur dédiée est conçue pour supporter des tensions plus élevées que la ou les puces recevant le premier interrupteur de puissance commandé et la diode de roue libre.
- le pont redresseur de l'alternateur est constitué par des diodes écrêteuses.

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel:

la figure 1 est un schéma d'une partie d'un régulateur équipé d'un circuit de démagnétisation rapide selon l'invention, et
la figure 2 est une vue de détail partielle d'un circuit régulateur selon l'invention réalisé en technologie monolithique.

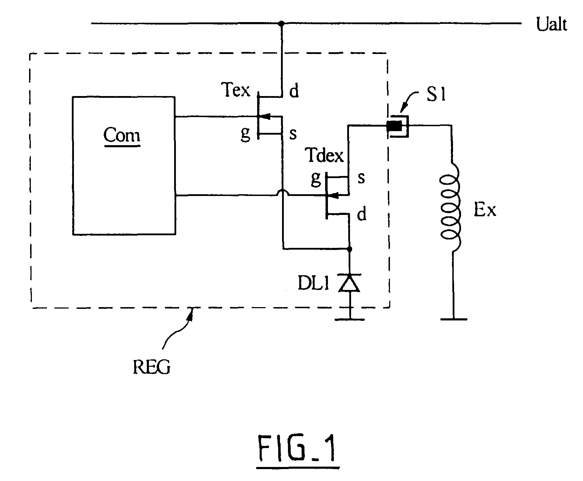

En référence tout d'abord à la figure 1, on a représenté une partie d'un alternateur de véhicule automobile équipé d'un régulateur REG de la tension de charge de la batterie associée (non représentée), la tension de sortie de l'alternateur après redressement étant désignée par Ualt.

L'enroulement d'excitation Ex de l'alternateur est connecté entre la masse et une sortie S1 du régulateur. Cette sortie est reliée à la source d'un transistor Tdex de type NOS, dont le drain est relié à la cathode d'une diode DL1 formant diode de roue libre. L'anode de la diode DL1 est reliée à la masse.

La grille de Tdex est commandée par une sortie d'un circuit de commande Com du régulateur.

Le point commun entre le transistor Tdex et la diode DL1 est en outre relié à la source d'un second transistor MOS Tex, dont le drain est relié à la tension de sortie d'alternateur Ualt.

Le transistor Tex est commandé au niveau de sa grille par une autre sortie du circuit de commande Com.

Pour plus de détails quant à l'architecture d'ensemble de l'alternateur, de son pont redresseur et de son régulateur, on se référera par exemple à la figure la du document FR-A-2 634 960 au nom de la Demanderesse.

On va maintenant décrire le comportement du circuit illustré sur la figure 1, tout d'abord dans des conditions de fonctionnement normal et ensuite lors de l'apparition d'une surtension liée à une déconnexion entre l'alternateur et la batterie.

En fonctionnement normal, le circuit de commande Com applique au transistor Tdex un signal qui le rend passant en permanence, tandis que le transistor de commande d'excitation Tex est, de façon un soi classique, commandé avec un signal dont le rapport cyclique varie en fonction du niveau de la tension Ualt par rapport à une valeur de consigne, pour contrôler le courant d'excitation dans l'enroulement Ex de telle sorte que la tension Ualt soit maintenue au voisinage de cette consigne.

Dans cette situation, la diode de roue libre DL1 joue son rôle normal, c'est-à-dire qu'elle permet de lisser le courant d'excitation en évitant toute surtension aux bornes du transistor Tex lorsque celui-ci devient bloqué.

Lorsque maintenant survient une surtension brusque due à un délestage de charge, le circuit de commande Com détecte celle-ci, par des moyens connus et qu'il n'est pas nécessaire de décrire, et applique aux transistors Tex et Tdex des signaux qui provoquent leur blocage.

En particulier, le blocage de Tdex permet de brutalement supprimer le courant dans l'enroulement d'excitation Ex, pour démagnétiser l'alternateur aussi rapidement que possible. Cette brusque coupure crée dans l'enroulement une surtension inverse, comme on va le voir ci-dessous, dont on va limiter la valeur de manière à engendrer une démagnétisation aussi rapide que possible tout en évitant de solliciter excessivement les composants et notamment le transistor Tdex.

Dans cette situation, il apparaît donc entre Ualt et la borne S1 une surtension qui est égale à la somme de la surtension de Ualt proprement-dite et de la surtension inverse précitée. Et l'on comprend que cette surtension globale va se répartir entre chacun des deux transistors Tex et Tdex.

Plus précisément, à supposer que, dans le cas d'un réseau de bord de 14 volts, la surtension de Ualt soit de l'ordre de 27 volts (valeur courante dans le cas où le pont redresseur de l'alternateur utilise de façon classique en soi des diodes à effet d'avalanche limitant la surtension), et à supposer en même temps que la tension inverse Vc dans l'enroulement d'excitation Ex soit telle que le potentiel à la borne S1 soit de - 30 volts par rapport à la masse (on verra plus loin comment plafonner cette tension inverse sur une valeur choisie), et en supposant enfin que la tension de jonction Vd de la diode DL1 soit de 1 volt, alors on comprend que :

- le transistor Tdex est exposée à une surtension égale à Vc-Vd, soit 29 volts;
- le transistor Tex est exposé à une tension égale à Ualt+Vd, soit 28 volts.

Ainsi la présente invention permet de répartir la surtension par parts voisines entre les deux transistors, à comparer aux montages antérieurs décrit plus haut, où le transistor d'excitation serait, dans une situation comparable, exposé à une surtension voisine de 60 volts.

Les deux transistors Tex et Tdex peuvent donc être conçus de façon sensiblement plus économique, en occupant en outre un encombrement réduit sur la puce du circuit régulateur dans le cas où celui-ci est réalisée en technologie monolithique.

En outre, la présente invention présente l'avantage de pouvoir réaliser un circuit régulateur possédant une borne unique de sortie S1 vers l'inducteur Ex, pour ainsi totalement préserver la compatibilité avec les agencements classiques d'alternateur et de régulateur.

On notera ici que la vitesse do diminution du courant Iex dans l'enroulement d'excitation est ici exprimée par:

$$dIex/dt = -(Vc + Rex.Iex)/L$$

où Rex est la résistance de l'enroulement, et L son inductance.

Ainsi dans la pratique, le choix de la valeur maximale absolue de Vc est un compromis entre la rapidité de démagnétisation et la tenue en tension du transistor Tdex.

Naturellement, l'avantage expliqué ci-dessus quant à la réduction des surtensions est encore plus flagrant dans des réseaux de bord à 28 volts, voire 42 volts. Dans ce dernier cas, on pourra utiliser des transistors de commutation présentant une tenue en tension d'environ 80 volts, alors que dans l'art antérieur une tenue à environ 140 volts aurait été nécessaire.

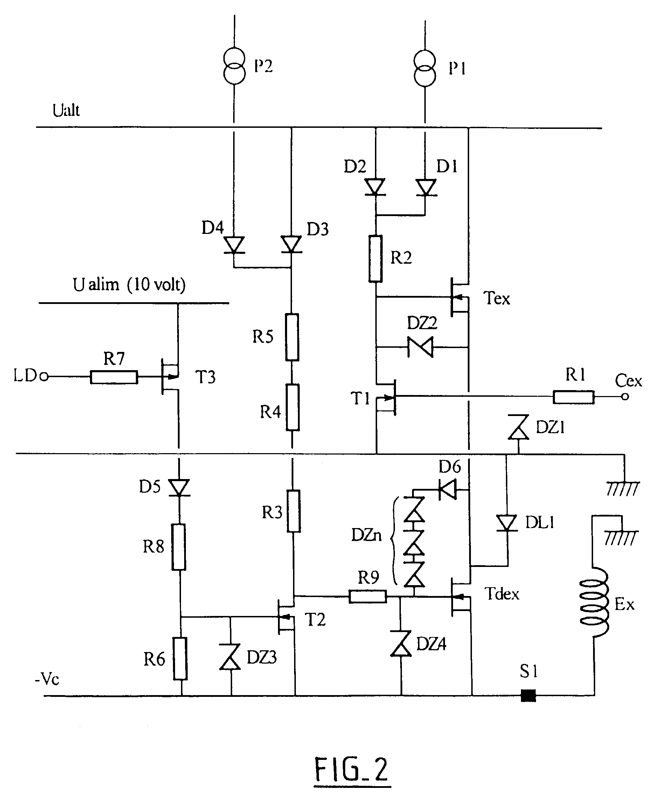

On va maintenant décrire en référence à la figure 2 un exemple de réalisation d'un circuit régulateur de l'invention en technologie monolithique.

Par souci de clarté, on a représenté du haut vers le bas les potentiels décroissants susceptibles d'apparaître en cas de surtension par déconnexion, à savoir la tension Ualt de sortie de l'alternateur après redressement, la masse et la tension négative Vc de démagnétisation rapide.

Le transistor d'excitation Tex, de type MOS, est commandé à travers une résistance R2 recevant d'une part le potentiel Ualt via une diode D2, et d'autre part un courant engendré par une pompe de charge P1 via une diode D1, les diodes D1 et D2 formant un aiguillage.

Le blocage de Tex est réalisé on mettant Sa grille à la masse à l'aide d'un transistor T1 dont la grille reçoit via une résistance R1 un potentiel positif de commande Cex.

La diode de roue libre DL1, également intégrée au circuit, a son anode reliée à la masse et sa cathode reliée à la borne S1 via le transistor Tdex de type MOS, l'inducteur Ex étant branché entre la masse et ladite borne S1.

Le transistor Tdex est normalement maintenu à l'état passant via une série de résistances R3, R4, R5 et R9 reliées au potentiel Ualt via une diode D3 et à une pompe de charge P2 via une autre diode D4.

Il est ici à noter que le recours a trois résistances R3 à R5 permet de répartir sur chacune d'entre elles la tension élevée existant entre Ualt et S1 comme expliqué plus haut, le nombre effectif de résistances étant choisi de maniére à ce que chaque résistance soit exposée à une tension compatible avec sa technologie de fabrication.

Le point commun entre R3 et R9 est relié à la borne S1 via un transistor MOS T2 qui est normalement bloqué à l'aide d'une résistance R6 entre sa source et sa grille.

Le transistor T3 (dont la source reçoit une tension d!alimentation continue Ualim du circuit) et les résistances R7 et R8 permettent de rendre le transistor T2 passant, et donc de bloquer le transistor Tdex, lorsqu'une surtension est rencontrée. Plus précisément, une partie non représentée (et classique en soi) du circuit détecte une telle situation et met alors à la masse la borne d'entrée LD qui commande T3 pour le rendre passant ainsi que T2.

De même, dans cette situation de surtension, le circuit régulateur bloque Tex, do façon classique.

Ce blocage de Tex et de Tdex va provoquer de façon extrêmement rapide une surtension négative aux bornes de l'inducteur Ex (potentiel négatif Vc), jusqu'à une valeur qui provoque la remise en conduction de Tdex. Plus précisément, l'empilage de diodes écrêteuses DZn montées en série entre la grille de Tdex et la cathode d'une diode D6, dont l'anode est reliée au drain de Tdex, va permettre de rendre Tdex passant lorsque la tension entre le drain et la source de Tdex va excéder une valeur déterminée, dont le calcul précis met en jeu la tension de jonction de la diode de roue libre DL1, la tension de jonction de la diode D6, la tension de seuil grille/source de Tdex (typiquement autour de 5 volts) et la tension d'écrêtage cumulée des diodes DZn.

La valeur d'écrêtage des diodes DZn est choisie par exemple comprise entre 20 et 40 volts dans le cas d'un réseau de bord sous 14 volts, et entre 40 et 80 volts dans le cas d'un réseau sous 42 volts.

On notera par ailleurs sur la figure 2 la présence de diodes écrêteuses DZ1, DZ2, DZ3 et DZ4 destinées à protéger les transistors T1, Tex, T2 et Tdex, respectivement, en étant branchés entre leur grille et leur source.

Enfin on notera que la diode D5 branchée entre le drain de T3 et la résistance R8 permet d'assurer un découplage entre T2 et T3 lorsque le circuit est en fonctionnement normal et que Tex et Tdex sont simultanément conducteurs.

Ainsi la description qui précède permet de réaliser une démagnétisation rapide dans une situation dc "load dump" en utilisant des technologies de silicium basse tension, ce qui facilite la réalisation du régulateur en technologie monolithique ou encore avec un nombre limité de puces de silicium. A cet égard, on peut par exemple utiliser une puce pour la diode de roue libre DL1 et une autre puce pour le reste du circuit.

Concrètement, l'invention permet de provoquer une démagnétisation qui fait passer la durée de la surtension d'environ 200 ms à environ 50 ms.

Si l'on souhaite réduire encore cette durée, il est avantageux de prévoir une puce de silicium qui sera dédiée uniquement à la fonction de démagnétisation. Cette puce peut être réalisée en technologie haute tension, alors que la ou les autres puces resteront en technologie basse tension. Une telle solution permet d'augmenter fortement la tension inverse de démagnétisation Vc, pour réduire encore la durée de la surtension jusqu'à la valeur souhaitée, par exemple de l'ordre de 20 ms.

Dans l'exemple concret décrit ci-dessus, cette puce dédiée recevra les composants suivants: P2, D3, D4, R5, R4, R3, T3, D5, R8, R6, D23, T2, R9, DZn, D6, D24 et Tdex.

Bien entendu, la présente invention n'est nullement limitée à la forme de réalisation décrite ci-dessus et représentée sur les dessins, mais l'homme du métier saura y apporter toute variante ou modification conforme à son esprit.

## Revendications

1. Alternateur notamment pour véhicule automobile, comprenant un rotor pourvu d'au moins un enroulement d'excitation (Ex) et un stator pourvu d'au moins un enroulement d'induit, un pont redresseur et un circuit régulateur (REG) comprenant un interrupteur de puissance commandé (Tex) monté en série avec une diode de roue libre (DL1) entre la tension de sortie (Ualt) de l'alternateur et la masse et alimentant ledit enroulement d'excitation, un circuit de commande (Com) de l'interrupteur de puissance de manière à réquler la tension de sortie (Ualt) de l'alternateur sur une valeur de consigne, alternateur caractérisé en ce que le circuit régulateur comprend un deuxième interrupteur de puissance commandé (Tdex) monté en série avec l'enroulement d'excitation (Ex) entre le point commun entre le premier interrupteur de puissance et la diode de roue libre d'une part, et l'enroulement d'excitation d'autre part, ce deuxième interrupteur de puissance étant à l'état conducteur pendant le fonctionnement normal du dispositif, et des moyens (Com) sensibles à l'apparition d'une surtension dans la tension de sortie (Ualt) de l'alternateur pour bloquer ledit deuxième interrupteur de puissance (Tdex) jusqu'à ce que la tension aux bornes de l'enroulement d'excitation ait atteint une tension inverse de démagnétisation (Vc) donnée.

2. Alternateur selon la revendication 1, caractérisé en ce que le deuxième interrupteur de puissance (Tdex) est monté entre la diode de roue libre (DL1) et une borne de sortie (S1) du circuit régulateur connectée à l'enroulement d'excitation (Ex).

3. Alternateur selon l'une dos revendications 1 et 2, caractérisé en ce que le deuxième interrupteur de puissance commandé (Tdex) est un transistor, et en ce que la valeur maximale de la tension inverse de démagnétisation (Vc) est fixée par au moins un composant semi-conducteur à écrêtage (DZn) monté entre une borne de commande (g) du transistor et l'une (d) de ses bornes d'entrée et de sortie de courant.

4. Alternateur selon l'une des revendications 1 à 3, caractérisé en ce que le circuit régulateur possède une borne de sortie unique (S1) vers une borne de l'enroulement d'excitation (Ex), l'autre borne dudit enroulement étant directement reliée à la tension de sortie de l'alternateur ou à la masse.

5. Alternateur selon l'une des revendications 1 à 4, caractérisé en ce que le circuit régulateur est réalisé sur une puce de semi-conducteur unique.

6. Alternateur selon l'une des revendications 1 à 4, caractérisé en ce que le premier interrupteur de puissance commandé et la diode de roue libre sont réalisés sur deux puces de semi-conducteur distinctes.

**7.** Alternateur selon l'une des revendications 1 à 6, caractérisé en ce que le second interrupteur de puissance commandé (Tdex) est réalisé sur une puce de semi-conducteur dédiée.

**8.** Alternateur selon la revendication 7, caractérisé en ce que ladite puce de semi-conducteur dédiée est conçue pour supporter des tensions plus élevées que la ou les puces recevant le premier interrupteur de puissance commandé et la diode de roue libre.

**9.** Alternateur selon l'une des revendications 1 à 8, caractérisé en ce que le pont redresseur est constitué par des diodes écrêteuses.

**10.** Dispositif régulateur (REG) pour la tension de sortie d'un alternateur notamment dans un véhicule automobile, le dispositif comprenant un interrupteur de puissance commandé (Tex) apte à être monté en série avec une diode de roue libre (DL1) entre la tension de sortie (Ualt) de l'alternateur et la masse et à alimenter un enroulement d'excitation (Ex) de l'alternateur, un circuit de commande (Com) de l'interrupteur de puissance de manière à réguler la tension de sortie (Ualt) de l'alternateur sur une valeur de consigne, caractérisé en ce qu'il comprend un deuxième interrupteur de puissance commandé (Tdex) apte à être monté en série avec l'enroulement d'excitation (Ex) entre le point commun entre le premier interrupteur de puissance et la diode de roue libre d'une part, et l'enroulement d'excitation d'autre part, ce deuxième interrupteur de puissance étant à l'état conducteur pendant le fonctionnement normal du dispositif, et des moyens (Com) sensibles à l'apparition d'une surtension dans la tension de sortie de l'alternateur pour bloquer ledit deuxième interrupteur de puissance (Tdex) jusqu'à ce que la tension aux bornes de l'enroulement d'excitation ait atteint une tension inverse de démagnétisation (Vc) donnée.

**11.** Dispositif selon la revendication 10, caractérisé en ce que le deuxième interrupteur de puissance (Tdex) est monté entre la diode de roue libre (DL1) et une borne de sortie (S1) du régulateur destinée à sa connexion avec l'enroulement d'excitation (Ex).

**12.** Dispositif selon l'une des revendications 10 et 11, caractérisé en ce que le deuxième interrupteur de puissance commandé (Tdex) est un transistor, et en ce que la valeur maximale de la tension inverse de démagnétisation (Vc) est fixée par au moins un composant semi-conducteur à écrêtage (DZn) monté entre une borne de commande (g) du transistor et l'une (d) de ses bornes d'entrée et de sortie de courant.

**13.** Dispositif selon l'une des revendications 10 à 12, caractérisé en ce qu'il possède une borne de sortie unique (S1) vers une borne de l'enroulement d'excitation (Ex), l'autre borne dudit enroulement étant apte à être directement reliée à la tension de sortie de l'alternateur ou à la masse.

**14.** Dispositif selon l'une des revendications 10 à 13, caractérisé en ce qu'il est réalisé sur une puce de semi-conducteur unique.

**15.** Dispositif selon l'une des revendications 10 à 13, caractérisé en ce que le premier interrupteur de puissance commandé et la diode de roue libre sont réalisés sur deux puces de semi-conducteur distinctes.

**16.** Dispositif selon l'une des revendications 10 à 15, caractérisé en ce que le second interrupteur de puissance commandé (Tdex) est réalisé sur une puce de semi-conducteur dédiée.

**17.** Dispositif selon la revendication 16, caractérisé en ce que ladite puce de semi-conducteur dédiée est conçue pour supporter des tensions plus élevées que la ou les puces recevant le premier interrupteur de puissance commandé et la diode de roue libre.

Ualt

Tex

d

Com

g

s

Tdex

g

s

d

DL1

REG

S1

Ex

FIG. 1

FIG_2

**Office européen des brevets**

## RAPPORT DE RECHERCHE EUROPEENNE

Numéro de la demande

EP 00 10 4083

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | DE 40 16 574 A (MERCEDES-BENZ) 25 juillet 1991 (1991-07-25) | 1,3,10, 12 | H02J7/16 |
| A | * colonne 1, ligne 1 - colonne 5, ligne 3; figures 1,2 * | 2,4-7, 11-16 | |
| | --- | | |
| D,Y | FR 2 494 056 A (SGS-ATES COMPONENTI ELECTRONICI) 14 mai 1982 (1982-05-14) * page 2, ligne 35 - page 6, ligne 31; figures 1-4 * | 1,3,10, 12 | |
| | --- | | |
| A | DE 196 49 790 A (BOSCH) 4 juin 1998 (1998-06-04) * colonne 1, ligne 40 - colonne 6, ligne 31; figures 1,2 * | 1-17 | |
| | --- | | |
| A | US 5 594 321 A (KOHL ET AL) 14 janvier 1997 (1997-01-14) * colonne 2, ligne 15 - colonne 8, ligne 67; figures 1-4C * | 1,4,10, 14 | |
| | --- | | |
| A | DE 38 40 535 A (EQUIPEMENTS ELECTRIQUES MOTEUR) 15 juin 1989 (1989-06-15) * colonne 3, ligne 28 - colonne 10, ligne 40; figures 1-5B * | 1,10 | **DOMAINES TECHNIQUES RECHERCHES (Int.Cl.7)** H02J |
| | ----- | | |

Le présent rapport a été établi pour toutes les revendications

| Lieu de la recherche | Date d'achèvement de la recherche | Examinateur |
|---|---|---|
| LA HAYE | 16 juin 2000 | Calarasanu, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

ANNEXE AU RAPPORT DE RECHERCHE EUROPEENNE
RELATIF A LA DEMANDE DE BREVET EUROPEEN NO.

EP 00 10 4083

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-06-2000

| Document brevet cité au rapport de recherche | Date de publication | Membre(s) de la famille de brevet(s) | Date de publication |
|---|---|---|---|
| DE 4016574 A | 25-07-1991 | AUCUN | |
| FR 2494056 A | 14-05-1982 | IT 1209369 B | 16-07-1989 |
| | | DE 3144043 A | 24-06-1982 |
| | | GB 2091945 A,B | 04-08-1982 |
| | | JP 57110038 A | 08-07-1982 |
| | | SE 459773 B | 31-07-1989 |
| | | SE 8106564 A | 08-05-1982 |
| | | US 4455585 A | 19-06-1984 |
| DE 19649790 A | 04-06-1998 | AU 5187298 A | 29-06-1998 |
| | | WO 9825337 A | 11-06-1998 |
| US 5594321 A | 14-01-1997 | DE 4327484 A | 23-02-1995 |
| | | FR 2709211 A | 24-02-1995 |
| | | GB 2281156 A,B | 22-02-1995 |
| | | JP 7147736 A | 06-06-1995 |
| DE 3840535 A | 15-06-1989 | FR 2624320 A | 09-06-1989 |
| | | IT 1224791 B | 24-10-1990 |

EPO FORM P0460

Pour tout renseignement concernant cette annexe : voir Journal Officiel de l'Office européen des brevets, No.12/82